# EUROPEAN PATENT APPLICATION

(11) **EP 0 906 824 A1**
(43) Date of publication of application: **07.04.1999**
(21) Application number: 97117071.7
(22) Date of filing: 01.10.1997
(51) Int. Cl.: B32B 5/24, B32B 7/10, D01D 5/247, D04H 1/54, D04H 3/14, D01F 8/00

(54) **Laminate with textile layer made of bicomponent yarn**

(71) Applicant: W.L. GORE & ASSOCIATES GmbH, 85640 Putzbrunn (DE)
(72) Inventor: Hottner, Martin, 83052 Bruckmühl (DE)
(74) Representative: Harrison, Robert John

(57) **Abstract**

The invention discloses a textile laminate (1, 400, 450) witha first layer (5) comprising a waterproof and breathable functional layer (10, 20) and a second layer (30) comprising at least a first component and a second component. The first component is stable to a first temperature and the second component melts at a lower second temperature. In one embodiment of the invention, the first component is polyester and the second component may be a thermoplastic such as copolyester, polyamide, copolyamide or polyethylene. The textile laminate (1) is particularly advantageous when two of such laminates (1, 400, 450) have to be joined or fused together. In this case a waterproof seam is created at the seam (500) between the two laminates (1, 400, 500).

## Description

### Field of the Invention

The invention relates to a laminate with a waterproof and breathable functional layer

### Prior Art

High technology apparel garments made of waterproof, windproof but breathable textile laminates are state of the art. These laminates contain a waterproof, windproof and breathable membrane onto which is laminated at least one textile layer.

The joining together of two textile laminates present a problem if the seam at which the two textile laminates are to be sealed is to be made waterproof. Various methods have been tried. For example, W.L.Gore & Associates has developed a method in which two GORE-TEXT® laminates are sealed at a seam using a GORE-SEAM® seam sealing tape.

Alternative methods known for sealing the seam include welding the seams together. However, this method only works for a limited number of textiles and the waterproofness of the seams is uncertain. It is furthermore possible to glue the laminates together. In order to ensure absolute waterproofness of the seams, it is necessary for the adhesive to penetrate the whole depth of the textile layer up to the membrane. In particular for voluminous textile layer, the seams have to be glued over a wide area. The seams thus produced are relatively stiff and uncomfortable.

US-A-5 003 902 describes a seam construction for use on protective clothing which involves overlapping the fabric pieces and bonding them together by use of a melt-adhesive film between them. A liquid-proof thread is sown through the overlap in order to secure the two pieces of fabric to each other. The completed seam is then heated to melt-bond the adhesive film to the fabric pieces and to seal any apertures left by the sewing thread.

### Summary of the Invention

It is therefore an object of this invention to provide an improved laminate construction.

It is furthermore an object of this invention to provide an improved laminate construction which can be joined to a further laminate at a waterproof seam.

It is furthermore an object of this invention to provide a seam joining two laminates which is sort and comfortable for the wearer of apparel made from the improved laminates of the invention.

It is furthermore an object of this invention to provide a seam joining two laminates which is strong, durable and hard-wearing.

These and other objects of the invention are solved by providing a laminate with a waterproof and breathable functional layer on which is laminated a second layer comprising at least a first component and a second component, the first component being stable to a first temperature and the second component melting at a second temperature, wherein the first temperature is higher than the second temperature. Such a laminate can be heated to a temperature higher than the second temperature but lower than the first temperature. The second component melts and provides an adhesive for joining the laminate to another substrate. The first component remains stable and provides structure to the seam. Preferably the second component is meltable at a temperature in the range from 80°C to 170°C whilst the first component is stable to a temperature of at least 140°C. For a reliable seam to be formed the difference in temperature between the first temperature and the second temperature is at least 20°C.

In one embodiment of the invention, the second layer further includes a propellant which is activatable by activation means. On activation this propellant produces a gas which in combination with the melted second component provides a foam-like substance with closed cells. The closed cells ensure that the seam remains waterproof but the seam is resilient but also "spongy" and thus sort. The seam is therefore comfortable for the wearer of apparel made from the laminate.

According to one embodiment of the invention the second layer is composed of a plurality of yarns in the form of strands, filaments, threads or fibres. The second component in the second layer is a thermoplastic which is selected from the group of thermoplastics comprising copolyester, polyamide, copolyamide or polyethylene. In the preferred embodiment of the invention the second component is a polyethylene.

The yarn in the second layer has in one embodiment a bicomponent structure comprising the first component and the second component. This structure may be either a cover-core structure, wherein the second component forms the cover, or a "side-by-side" structure.

In the embodiment of the invention with a propellant, the propellant is activated at a third temperature, the third temperature being intermediate between the second temperature and the first temperature. The propellant can be an integral part of the second component and is selected from the group of propellants consisting of azodicarbonamide, ammonium hydrogen carbonate, toluolsulfohydrazin or diazoaminobenzol. In the preferred embodiment of the invention the propellant is azodicarbonamide.

The functional layer included in the laminate is a membrane or a film. The functional layer is selected from the group of materials consisting of polyester, polyurethane, polyvinylchloride, polytetrafluoroethylene or polyolefins. Preferably the functional layer is made from expanded PTFE. Expanded PTFE is known to be very waterproof and highly breathable. It provides the laminate with an MVTR of less than 150 RET and a water entry pressure of greater than 0.13 bar.

### Description of the Drawings

- Fig. 1: shows the textile laminate of the invention.
- Fig. 2: shows a method of manufacture of the composite layer of the textile laminate.
- Fig. 3: shows a method of lamination of textiles onto the composite layer of the textile laminate.
- Fig. 4: shows the method of formation of a seal between two textile laminates according to the invention.
- Fig. 5: shows an embodiment of the invention in which the bicomponent layer is fused to the backer fabric.
- Fig. 6: shows an embodiment of the invention in which the textile laminate is used as a seam sealing tape.
- Fig. 7: shows an embodiment of the invention in which a pinhole is sealed by heating the bicomponent layer of the textile laminate.

### Definitions

### Waterproof

Waterproof as used herein is meant having water-penetration-resistance (hydrostatic resistance) of 0.13 bar or more. This measurement is carried out using by placing a test sample with an area of 100 cm² under increasing water pressure. For this purpose, distilled water with a temperature of 20±2°C is used and the rate of increase of the water pressure was 60±3 cmH₂O/min. The water penetration resistance of the sample is then the pressure at which water appears on the opposite side of the sample. The exact method of carrying out this test is given in the ISO Standard No. 811 from 1981.

### Water Vapour Permeable

Water vapour permeable as used herein is meant having a water-vapour-transmission rate RET of under 150 (m².Pa) / W. The water vapour transmission rate is measured using the Hohenstein MDM Dry Method which is explained in the Standard-Prüfvorschrift (Standard Test Rules) No. BPI 1.4 dated September 1987 and issued by the Bekleidungsphysiologisches Instituts e.V. Hohenstein, Germany.

### • Functional Layer

The term functional layer is used to denote a layer which had the properties that it is both waterproof and water-vapour permeable.

### • Yarn

The term yarn is used in the description is used to describe the continuous strands of material which are made into the textile. It includes strands, filaments, fibres and the like.

### Detailed Description of the Invention

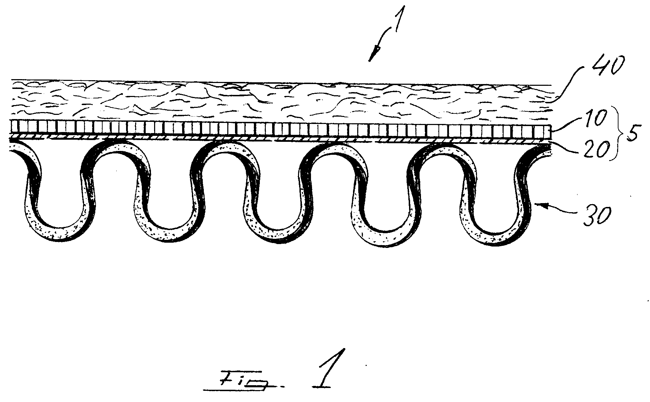

Fig. 1 shows a textile laminate 1 produced in accordance with this invention. The laminate comprises a composite layer 5 formed from a porous polymeric layer 10 and a continuous non-porous hydrophilic water vapour permeable polymer layer 20. On the first side of the composite layer 5 a bicomponent strand layer 30 comprising one or more bicomponent yarns is placed and on the second side of the composite layer is a backer fabric 40 is placed.

The porous polymeric layer 10 used in this invention is a microporous polymer membrane having a microscopic structure of open, interconnecting micro voids. It exhibits air permeability and as such imparts, or does not impair, water vapour permeability. The microporous membrane used in the laminate 5 described herein is typically of a thickness of 5 µm to 125 µm, most preferably of the order of about 5 µm to 25 µm. The useful polymers of the microporous membrane material include plastic polymers as well as elastomeric polymers. Examples of suitable polymers include polyesters, polyamide, polyolefins, polyketones, polysulfones, polycarbonates, fluoropolymers, polyacrylates, polyurethanes, copolyetheresters, copolyetheramides and the like. The preferred polymers are plastic polymers.

The preferred microporous polymer membrane material is expanded microporous polytetrafluoroethylene (PTFE). These materials are characterised by a multiplicity of open, interconnecting microscopic voids, high void volume, high strength, soft, flexible, stable chemical properties, high water vapour transfer and a surface that exhibits good contamination control characteristics. US Patents US-A- 3 953 566 and US-A-4 187 390 describe the preparation of such microporous expanded polytetrafluoroethylene membranes and are incorporated herein by reference.

The continuous water vapour permeable polymer layer 20 is a hydrophilic polymer. The hydrophilic layer selectively transports water by diffusion but does not support pressure-driven liquid or air flow. Therefore moisture, i.e. water vapour, is transported but the continuous layer of the polymer precludes the passage of such things as air-borne particles, micro-organisms, oils or other contaminants. This characteristic imparts to the textile including the polymer layer 20 and in turn to articles made from it, such as socks or gloves, good contamination control characteristics by functioning as a barrier to contaminants of all sizes. Furthermore the water vapour transmitting characteristics of the material allow for comfort characteristics to the wearer.

The continuous water vapour permeable polymer layer 20 is typically of a thickness of between 5 µm and 50 µm, preferably between about 10 µm and 25 µm. This thickness has been found to be a good practical balance to yield satisfactory durability, continuity and rate of water vapour transmission.

Although not limited to them, the continuous water-vapour permeable polymers most useful herein are those of the polyurethane family, the silicone family, the co-polyetherester family or the co-polyetherester amide family. Suitable co-polyetherester hydrophilic composition may be found in the teachings of US-A-4 493 870 (Vrouenraets) and US-A- 4 725 481 (Ostapachenko). Suitable hydrophilic compositions are described in US-A- 4 2340 838 (Foy et al.). Suitable polyurethanes maybe found in US-A-4 194 041 (Gore). A preferred class of continuous, water vapour permeable polymers are polyurethane, especially those containing oxyethylene units, such as described in US-A- 4 532 316 (Henn). Typically these materials comprise a composition having a high concentration of oxyethylene units to impart hydrophilicity to the polymer. The concentration of oxyethylene units is typically greater than 45% by weight of the base polymer, preferably greater than 60%, most preferably greater than 70%.

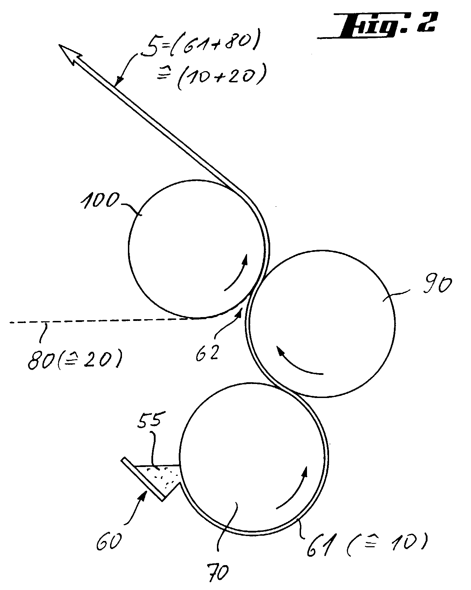

The composite layer 5 used to make the laminate 1 of this invention can be prepared according to the teachings of US-A- 5 026 591 (Henn et al.). This method is illustrated but not limited to the following description of a four roll stack as shown in Fig. 2. Metered control of the molten water vapour permeable polymer 55 is provided for by a gravure roll 70 and a doctor blade/polymer reservoir 60. The water vapour permeable polymer 55 is applied as a thin, continuous liquid film 61 to the continuously moving porous polymer membrane 80 in the nip 62 between two rotating rolls 90, 100; the first one of the rotating rolls 90 having been coated with the liquid polymer and the second one of the rotating rolls 100 providing support so as to force the liquid polymer partially into the porous structure of the polymer membrane 80.

The textile laminate 1 of the current invention is preferably provided with a backer fabric 40. The backer fabric 40 may be either woven, non-woven or knitted and may be made from a wide variety of materials such as polyester, polyamide (Nylon), polyolefins and the like.

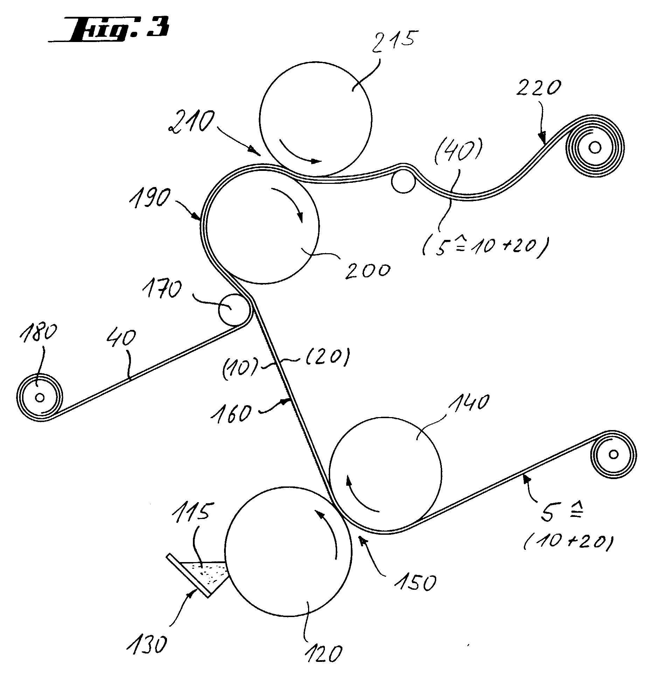

The backer fabric 40 is laminated to the second side of the composite layer 5 by a standard lamination process such as that shown in Fig. 3. In the process, a dot pattern of heat-curing adhesive 115 from a doctor knife/adhesive reservoir 130 is metered onto the second side of the composite layer 5 by a gravure roll 120. The composite layers is held under minimal tension against the gravure roll 120 by a low durometer rubber roll 140 at a pressure sufficient to effect removal of the adhesive dots onto the second side of the composite layer 5.

On exiting a printing nip 150, the adhesive dot coated composite layer 160 is brought to a laminating roll 170 where it is brought in intimate contact with the backer fabric 40 provided from a storage roll 180. The laminate 190 created by the uncured adhesive is then wrapped around a heating roll 200 and heated to a temperature suitable for curing the adhesive, e.g. around 125°C. Upon exiting the nip 210 between the roll 200 and a pressure roll 215 , the laminate 220 is taken up on a storage roll 230.

The bicomponent layer 30 is a woven, non-woven or knitted textile layer made from strands, filaments, threads or fibres having at least two components. The first component is a material which is stable, i.e. does not melt or otherwise disintegrate, to a high temperature, e.g. around 230°C. The second component is a material with a low melting temperature, e.g. around 110°C. The two components in the bicomponent layer may be made up of two different types of strands, filaments, threads or fibres. More preferably, a bicomponent yarn is used. The bicomponent yarn may have either a core-sheath structure or a "side-by-side" structure. Table 1 shows a number of possible bicomponent yarns which may be used in this invention.

**Table 1**

| **Supplier/Trade Name** | **Polymers low/high** | **melting temperature of low melt component** | **structure/construction** |
|---|---|---|---|
| Hoechst/ Celanese (Trevira 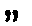 V 721 -724") | Co-PET/PET, | 130 or 170 °C | Bico.-filament (sheath/core) or filament blend |
| | PE/PET, | 127 °C | |
| | PP/PET, | 166 °C | |
| | PA12 or 6/PET | 178 or 221 °C | |
| | PBT | 227 °C | |
| Hänsel / Spunfab | Co-PA, Co-PET 100 % | 95 - 170 °C | Monofil /melt blown 100 % low melting |
| Far Eastern Textile ( 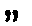 EASTLON") | PE/PP, | 130 °C | sheath/core 10 - 70 % low melting |
| | PE/PET, | | |
| | CoPET/PET | 190 °C | |
| (Du Pont) | PA 6/PA 6.6 | 218 °C | sheath/core |
| EMS-Chemie ( 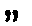 GRILON") | Co-PA/PET | 85 or 140 °C (monofil.) | PET-core (20 %), |
| | | 85 - 160 °C (multifil.) | Co-PA-sheath (80 %) or 100 % low melting |
| Danaklon 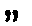 AL-Adhesion-C fibres" | PE/PP | 125 - 145 °C | sheath/core |

The bicomponent layer 30 is described in this description as having two components. It should be note that the bicomponent layer may be replaced by a tricomponent layer containing three components or a multicomponent layer containing a plurality of components.

The bicomponent layer 30 is laminated onto the first side of the composite layer 5 or onto the porous polymeric layer 10 by a lamination process similar to that described above with reference to Fig. 3. Care must be taken during the lamination process that the low melting temperature component does not melt during lamination of the bicomponent layer 30 onto the composite layer 5.

The bicomponent layer 30 may additionally include a propellant which produces a gas when activated. Known means for activating the propellant are either heating the activation means or irradiating the propellant by, for example, an electron beam or high frequency electromagnetic radiation. After activation of the propellant and melting of the second low melting temperature component, the gas produced by the propellant produces in combination with the melted low melting temperature component a closed-pore foam as will be described later. Known propellants which may be used in the invention are azodicarbonamide (ADC), ammonium hydrogen carbonate (NH₄CO₃), Toluolsulfohydrazin (TSH) or Diazoaminobenzol.

Several methods are known for ensuring that the propellant is inserted into the layer.

In the first method, the propellant is added to the master batch from which at least one of the fibres forming the bicomponent layer 30 is to be spun. The blend of propellant and fibre material is subsequently spun conventionally using a nozzle.

A second method includes adding the propellant as a powder to the spinning extruding in the nozzle prior to the spinning of one of the fibres forming the bicomponent layer 30. In both the first and second method, the propellant is evenly distributed throughout the cross-section of the fibre. The propellant is thus integrally incorporated within the fibre.

A third method involves coating a monofilament or a multifilament yarn as it passes a nozzle. An extruder presses a hot melt containing a propellant which flows around the yarn and coats the yarn. Using this method only the outside of the yarn is coated with the propellant.

In the preferred embodiment of the invention, the propellant is heat-activated and the activation temperature is chosen to be at least around 20°C higher than the melting temperature of the low melting temperature component. The activation temperature is furthermore chosen to be substantially below the melting temperature of the high melting temperature component.

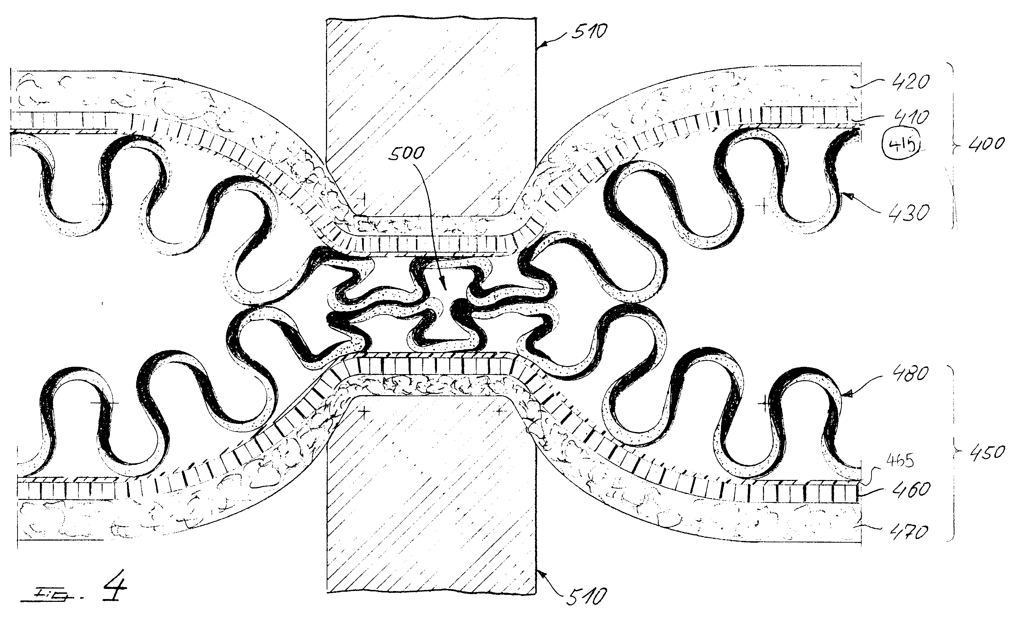

The textile laminate 1 of the invention is particularly useful in applications in which two textile laminates have to be joined or fused together as is illustrated in Fig. 4. In this example a first textile laminate 400 is to be joined to a second textile laminate 450. The first textile laminate 400 comprises a first composite layer 410 including a porous polymeric layer 415, a first backer fabric 420 laminated to the second side of the first composite layer 410 and a first bicomponent layer 430 laminated to the first side of the first composite layer 410. The second textile laminate 450 comprises a second composite layer 460 including a porous polymeric layer 465, a second backer fabric 470 laminated to the second side of the second composite layer 460 and a second bicomponent layer 480 laminated to the first side of the second composite layer 480. The first textile laminate 400 is to be joined at a seam 500 to the second textile laminate 450 using a heat seal die 510. Use of the propellant to create a foam at the seam 500 creates a seam which is substantially waterproof.

In Fig. 4, it should be observed that the bicomponent layers 430 and 480 are depicted immediately before melting.

The temperature of the heat seal die is chosen to be greater than that of the melting temperature of the second low melting temperature component of the bicomponent layers 400 and 450 but to be below the melting temperature of the first component of the bicomponent layers 430 and 480. In the preferred embodiment of the invention the heat seal die is at a temperature of 190°C. At this temperature the low melting temperature components in the bicomponent layers 430 and 480 melt and, due to the pressure exerted on the textile laminates 400 and 450 by the heat seal die, the bicomponent layers 430 and 480 fuse together.

The low melting component fills the gaps in the bicomponent layer 430 between the structure formed by the fibres having a higher melting temperature. The higher melting temperature fibres serve therefore two functions. Firstly they provide mechanical strength to the seam. Secondly they act as a "gap-keeper" or spacer to ensure that the lower melting temperature fibres in the molten state to not seep out of the seam 500.

If a propellant is included in the bi-component layer 430, 480, then this is activated by the heat produced by the heat seal die and a closed cell foam is produced at the seam 500. Temperature is applied to a sufficiently wide area of the seam 500 for a sufficient length of time to ensure that the seam is watertight. Typically the seam would have a width of 1-3 mm and the temperature would be applied at 190°C for 1-10 seconds.

The function of the two components in the bi-component layers 430 and 480 can be easily understood from Fig. 4. The first component provides mechanical strength to the seam 500 since it neither melts nor otherwise disintegrates at the temperature to which the seam 500 is subjected by the heat seal die 510. The second (low melting temperature) component provides the adhesive between the two laminates 400 and 450. If a propellant is used, then the second component together with the first component provides the walls of the cells of the closed-pore foam with sufficient strength to carry any load to which the seam 500 is subjected. Furthermore, the second component imparts sufficient wall strength to the individual cells to prevent them from connecting with each other to prevent them from providing a leak path through the seam 500 during flexing of the laminates 400, 450.

An advantage of using the propellant to form the close-cell foam is that the seam thus created is substantially more flexible and softer to touch than a seam formed without the foam created by the molten second component with the propellant.

The seam is deemed to be watertight when the water entry pressure of the seam is greater than 0,13 bar when measured using the Hohenstein MDM Dry method as explained above.

In the example illustrated in Fig. 4, it is assumed that the bi-component layers 430 and 480 are fused to each other.

It is also possible to fuse a bi-component layer 430, 480 directly to one of the backer fabrics 470 or 420 as is shown in Fig. 5 in which the components of the textile laminates are given the same numerals as their counterparts in Fig. 4. Use of the propellant in this example has the advantage that the molten second component is "blown" into the backer fabric 420, 470, thus creating a substantially more watertight seam.

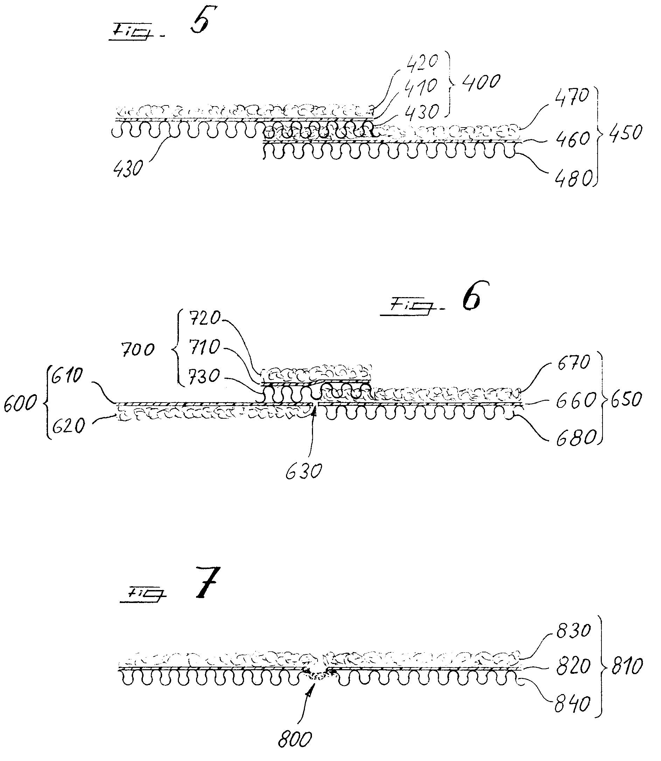

A further application of the invention is depicted in Fig. 6 in which a two layer textile laminate 600 comprising a composite layer 610 and a backer fabric 620 is to be joined to a three layer textile laminate 650 with a composite layer 660, a first backer fabric 670 on a first side of the composite layer 660 and a second backer fabric 680 on a second side of the composite layer 660. A seam 630 between the two layer textile laminate 600 and the three layer textile laminate 650 is sealed by a tape 700 made from the textile laminate according to the invention. The textile laminate has a composite layer 710 with a backer fabric 720 on the side of the composite layer 710 facing away from the seam and a bi-component layer 730 on the side of the composite layer 710 facing the seam 630.

A further application of the invention is shown in Fig. 7 in which a pinhole 800 is made in a textile laminate 810 comprising a composite layer 820 with a backer fabric 830 on a first side and a bi-component layer 840 on a second side. The pinhole 800 can be sealed by heating the bi-component layer 840 in the region surrounding the pinhole such that the molten low melting temperature component in the bi-component layer 840 seals the pinhole.

### Examples

### Example 1

A bicomponent layer is made of a knit comprising copolyester fibre with a low melting temperature of 130°C and a polyester fibre with a high melting temperature of 240°C. The bicomponent layer is laminated onto a composite layer consisting of expanded PTFE with a polyurethane coating using the lamination process described above. The composite layer is available under the brand name GORE-TEX® from W.L.Gore & Associates GmbH, Putzbrunn, Germany. Two pieces of the laminate are joined together using the heat seal die shown in Fig 4. at a temperature of around 150°C and a seam between the two pieces of laminate is thus formed. The seam is watertight to a water entry pressure of greater than 0.13 bar as measured using the test method described in ISO Norm 811.

### Example 2

A bicomponent layer was made of a non-woven textile comprising polyethylene fibre with a low melting temperature of 130°C and a polypropylene fibre with a high melting temperature of 165°C. The bicomponent layer was produced by the company Textilgruppe Hof in Hof, Germany, using fibres produced by the Far Eastern Textile Company. The bicomponent layer is laminated onto a composite layer consisting of expanded PTFE with a polyurethane coating using the lamination process described above. The composite layer is available under the brand name GORE-TEX® from W.L.Gore & Associates GmbH, Putzbrunn, Germany. Two pieces of the laminate are joined together using the heat seal die shown in Fig 4. at a temperature of around 150°C and a seam between the two pieces of laminate is thus formed. The seam is watertight to a water entry pressure of greater than 0.13 bar as measured using the test method described in ISO Norm 811.

### Example 3

This is the same as example 1 except that a propellant of azodicarbonamide was coated onto the knit. The seam produced between the two pieces of laminate is watertight to a water entry pressure of greater than 0.13 bar.

### Example 4

This is the same as example 2 except that a propellant of azodicarbonamide was coated onto the knit. The seam produced between the two pieces of laminate is watertight to a water entry pressure of greater than 0.13 bar.

## Claims

1. Laminate (1) with at least
a first layer (5) comprising a waterproof and breathable functional layer (10, 20).
and a second layer (30) laminated to said first layer (5) and comprising at least a first component and a second component, the first component being stable to a first temperature and the second component melting at a second temperature, wherein the first temperature is higher than the second temperature.

2. Laminate according to claim 1, whereby
the second layer further includes a propellant which is activatable by activation means.

3. Laminate according to claim 1, whereby
the second component is meltable at a temperature in the range from 80°C to 170°C.

4. Laminate according to claim 1, whereby
the first component is stable to a temperature of at least 140°C.

5. Laminate according to claim 1 whereby
the difference in temperature between the first temperature and the second temperature is at least 20°C.

6. Laminate according to claim 1, wherein
the second layer (30) is composed of a plurality of yarns in the form of strands, filaments, threads or fibres.

7. Laminate according to claim 1, wherein the second component is a thermoplastic.

8. Laminate according to claim 7 wherein the second component is selected from the group of thermoplastics comprising copolyester, polyamide, copolyamide or polyethylene

9. Laminate according to claim 8 wherein the second component is a polyethylene.

10. Laminate according to claim 6 wherein the yarn has a bicomponent structure comprising the first component and the second component.

11. Laminate according to claim 10 wherein the yarn has a cover-core structure, wherein the second component forms the cover.

12. Laminate according to claim 10 wherein the strand has a "side-by-side" structure.

13. Laminate according to claim 8 wherein the second component is a blend of yarns.

14. Laminate according to claim 13 wherein the yarn is comprised of fibres.

15. Laminate according to claim 2 wherein the propellant after activation generates a closed cell foam with the second component after melting.

16. Laminate according to claim 2 wherein the propellant is activated at a third temperature, the third temperature being intermediate between the second temperature and the first temperature.

17. Laminate according to claim 2, wherein the propellant is an integral part of the second component.

18. Laminate according to claim 2, wherein the propellant is selected from the group of propellants consisting of azodicarbonamide, ammonium hydrogen carbonate, toluolsulfohydrazin or diazoaminobenzol.

19. Laminate according to claim 18 wherein the propellant is azodicarbonamide.

20. Laminate according to claim 1 wherein the functional layer (5) is a membrane or a film.

21. Laminate according to claim 20 wherein the functional layer (5) is selected from the group of materials consisting of polyesters, polyamide, polyolefins, polyvinylchloride, polyketones, polysulfones, polycarbonates, fluoropolymers including polytetrafluoroethylene, polyacrylates, polyurethanes, copolyetheresters, copolyetheramides.

22. Laminate according to claim 21 wherein the functional layer (5) is made from expanded PTFE.

23. Laminate according to claim 1 wherein the MVTR of the laminate (1) is less than 150 RET.

24. Laminate according to claim 1 wherein the water entry pressure of a laminate (1) is greater than 0.13 bar.

25. A combination of a first laminate (400) according to any of the above claims and a substrate (450, 650) which is joined to said laminate (400) at a seam (500).

26. The combination according to claim 25 wherein the substrate (450, 650) is a second laminate according to claims 1 through 25.

27. The combination according to claim 26 wherein the second layer (430) of the first laminate (400) is joined to the second layer (480) of the second laminate (450).

28. The combination according to claim 25 wherein the substrate is a backer fabric (40).

29. The combination according to claim 25 wherein the water entry pressure of the seam is greater than 0,13 bar

30. Articles of clothing made from the laminates of claims 1 to 24.
